Europäisches Patentamt

European Patent Office

Office européen des brevets

(11) Veröffentlichungsnummer: **0 438 661 A2**

# EUROPÄISCHE PATENTANMELDUNG

(21) Anmeldenummer: **90122294.3**

(51) Int. Cl.⁵: **B65G 65/48**

(22) Anmeldetag: **22.11.90**

(30) Priorität: **22.01.90 DE 4001706**

(43) Veröffentlichungstag der Anmeldung:
**31.07.91 Patentblatt 91/31**

(84) Benannte Vertragsstaaten:
**AT BE CH DE DK ES FR GB GR IT LI NL SE**

(71) Anmelder: **Förster, Martin, Dipl.-Ing.**
**Gerwigstrasse 27**
**W-7707 Engen(DE)**

(72) Erfinder: **Förster, Martin, Dipl.-Ing.**
**Gerwigstrasse 27**
**W-7707 Engen(DE)**

(74) Vertreter: **Engelhardt, Guido, Dipl.-Ing.**
**Patentanwalt Montafonstrasse 35 Postfach**
**1350**
**W-7990 Friedrichshafen 1(DE)**

(54) **Dosiereinrichtung.**

(57) Bei einer Vorrichtung (1) zur dosierten Überführung eines schüttfähigen Gutes (10) aus einem Vorratsbehälter (3) in einen Tränkeautomaten (2) mit einer rotierend antreibbaren Dosierscheibe (11), die mit Meßkammern (12) versehen ist, ist die um eine vertikale Achse (A) antreibbare Dosierscheibe (11) seitlich versetzt zu dem Vorratsbehälter (3) und achsparallel zu diesem auf einer mit einer Auswurföffnung (20) versehenen Bodenplatte angeordnet und greift segmentartig in den Vorratsbehälter (3) ein; des weiteren sind die Meßkammern (12) in die Außenmantelfläche der Dosierscheibe (11) eingearbeitet und in vertikaler Richtung nach oben und unten sowie in radialer Richtung nach außen offen ausgebildet.

Durch diese Ausgestaltung ist es möglich, die Vorrichtung (1) in eine Anlage einzubauen und eine exakte dosierte Zuführung zu bewerkstelligen, ohne daß dazu ein großer Bauraum sowie ein hoher Bauaufwand erforderlich sind. Auch ist ein nahezu störungsfreier Betrieb gewährleistet, da lediglich die Dosierscheibe (11) anzutreiben ist, um das in dem Vorratsbehälter (3) in die Meßkammern (12) der Dosierscheibe (11) eingebrachte Gut in den Tränkeautomaten (2) überzuführen.

FIG. 1

## DOSIEREINRICHTUNG

Die Erfindung bezieht sich auf eine Vorrichtung zur dosierten Überführung eines schüttfähigen Gutes aus einem Vorratsbehälter in eine Arbeitsstation, beispielsweise zur Einbringung eines pulverförmigen Medikamentes in ein in einem Tränkeautomaten aufzubereitendes Futtermittel, mit einer rotierend antreibbaren Dosierscheibe, die mit Meßkammern versehen ist.

Durch die DE-OS 33 36 752 ist eine Füllstation dieser Art, die nach dem Prinzip der volumetrischen Dosierung arbeitet, zum Befüllen von leeren Glasflaschen bekannt. Die Füllstation besteht hierbei aus einem um eine horizontale Achse umlaufendes Dosierrad, das unter einem Füllschacht für pulverförmiges Gut angeordnet ist und Meßkammern aufweist, die einseitig offen sind. Durch Anlegen von Vakuum an die Meßkammern wird das in die auf einem Transportband der Füllstation zugeführten Flaschen einzufüllende Gut angesaugt und das Meßvolumen wird somit gefüllt. Beim Weiterdrehen des Dosierrades wird das Vakuum so lange aufrechterhalten, bis das Meßvolumen sich über der Öffnung einer Flasche befindet. Zu diesem Punkt wird das Vakuum abgeschaltet und statt dessen wird das Meßvolumen mit Preßluft beaufschlagt, so daß dieses in die Flasche übergeführt wird.

Abgesehen davon, daß das Dosierrad und das die leeren Flaschen zuführende Transportband taktweise aufeinander abgestimmt angetrieben werden müssen, ist der weitere Bauaufwand, um das pulverförmige Gut in das Dosierrad einzusaugen und aus diesem wiederum auszustoßen, erheblich. Vor allem aber ist von Nachteil, daß eine exakte Dosierung nur mit zusätzlichem Aufwand zu bewerkstelligen ist. Der Füllstation ist dazu eine Apparatur zur Füllgewichtskontrolle nachgeschaltet, die aus einem Meßgerät zur Bestimmung der Mikrowellenabsorption der eindosierten Pulvermenge besteht. Der Anwendungsbereich dieser bekannten aufgrund des großen Bauaufwandes auch störanfälligen Füllstation, die außerdem einen großen Bauraum beansprucht, ist daher beschränkt.

Aufgabe der Erfindung ist es demnach, eine Vorrichtung zur dosierten Überführung eines schüttfähigen Gutes der eingangs genannten Gattung zu schaffen, die nicht nur einfach in der konstruktiven Ausgestaltung und somit wirtschaftlich herzustellen ist, sondern die auch sehr vielseitig zur dosierten Einbringung eines schüttfähigen Gutes eingesetzt werden kann. Vor allem aber soll erreicht werden, daß die Dosiereinrichtung in bestehende Anlagen ohne Schwierigkeiten zu integrieren ist und eine äußerst exakte Dosierung, beispielsweise eines in ein Futtermittel einzubringenden Medikamentes, ermöglicht. Des weiteren soll die Dosiervorrichtung klein bauen, und es soll eine hohe Betriebssicherheit gegeben sein.

Gemäß der Erfindung wird dies bei einer Vorrichtung zur dosierten Überführung eines schüttfähigen Gutes aus einem Vorratsbehälter in eine Arbeitsstation mittels einer rotierend antreibbaren und mit Meßkammern versehenen Dosierscheibe dadurch erreicht, daß die um eine vertikal verlaufende Achse antreibbare Dosierscheibe seitlich versetzt zu dem Vorratsbehälter und achsparallel zu diesem auf einer die Meßkammern abdeckenden und mit einer Auswurföffnung versehenen ortsfesten Bodenplatte angeordnet ist und segmentartig im Bereich des Bodens des Vorratsbehälters in diesen eingreift, und daß die Meßkammern in die Außenmantelfläche der Dosierscheibe eingearbeitet und in vertikaler Richtung nach oben und unten sowie in radialer Richtung nach außen offen ausgebildet sind.

Die Meßkammern der Dosierscheibe können hierbei als im Querschnitt etwa halbkreisförmige Ausnehmungen, als keilförmige Schlitze oder in ähnlicher Weise ausgebildet sein, es ist aber auch möglich, die Meßkammern als sich in Umfangsrichtung der Dosierscheibe erstreckende Ausnehmungen auszubilden, die in den Eckbereichen mit einem vorzugsweise etwa der Tiefe der Ausnehmungen entsprechenden Radius ausgerundet sind, wobei, um das Entleeren zu erleichtern, die Meßkammern eine sich in Richtung der Bodenplatte erweiternde Querschnittsform aufweisen sollte.

Zweckmäßig ist es des weiteren, die Dosierscheibe außerhalb des Vorratsbehälters in einem durch die Bodenplatte, einer Abdeckplatte und einer zwischen diesen vorgesehenen Ummantelung ausgebildeten Gehäuse anzuordnen und auswechselbar in der Bodenplatte und der Deckplatte des Gehäuses drehbar zu lagern.

Vorteilhaft ist es auch, über der Auswurföffnung der Bodenplatte ein vertikal zustellbares Austragglied anzuordnen, das als vorzugsweise durch die Kraft einer Feder belastete in einer auf dem Dosierscheibengehäuse angeordneten Hülse eingesetzten Kugel oder als mit einer Anschrägung versehener Stift, als verstellbarer Stößel oder dgl. ausgebildet sein kann.

Ferner ist es angebracht, die Dosierscheibe auf einer oder beiden der Abdeckplatte und/oder der Bodenplatte zugekehrten Stirnseiten mit einem Abstreifer zu versehen, der als an der Dosierscheibe angearbeitetes mehrkantiges Ansatzstück, vorzugsweise als quadratisches oder sechseckig ausgebildetes Ansatzstück ausgebildet sein kann, dessen den Meßkammern zugekehrte Kanten abgeschrägt sind und die derart an der Dosierscheibe angearbeitet sein sollten, daß deren Ecken jeweils im Bereich einer Meßkammer angeordnet sind oder an eine der Meßkammern angrenzen.

Des weiteren kann die Bodenplatte des Dosierscheibengehäuses mit einer oder mehreren schlitzartig ausgebildeten und in die Auswurföffnung mündenden Freisparungen versehen sein, und es kann an dem Gehäuse des Vorratsbehälters ein vor der Abdeckplatte des Dosierscheibengehäuses angeordneter sich vorzugsweise in Umfangsrichtung des Vorratsbehälters bis etwa in Höhe der Rotationsachse der Dosierscheibe erstreckende Abstreifer angebracht werden.

Zur Einbringung des Gutes in die Meßkammern der Dosierscheibe ist es ferner vorteilhaft, in dem Vorratsbehälter einen vorzugsweise durch einen der Dosierscheibe zugeordneten Antriebsmotor rotierend antreibbaren Füllschieber anzuordnen, der durch zwei oder mehrere diametral einander gegenüberliegend angeordnete das in den Vorratsbehälter ragende Segment der Dosierscheibe überfahrende Federbügel, als Platten oder dgl. gebildet sein kann. Die Federbügel sollten jeweils zwei in einem Winkel von 90° zueinander angeordnete Arme aufweisen, und an den Enden mindestens eines der Federbügel des gleichsinnig mit der Dosierscheibe angetriebenen Füllschiebers sollten in vertikaler Richtung nach oben abstehende Abstreifer angebracht sein, um das eingelagerte Gut von den Wänden des Vorratsbehälters abzustreifen.

Zum Antrieb der Dosierscheibe kann ein vorzugsweise konzentrisch zu dem Vorratsbehälter angeordneter elektrischer Schrittmotor vorgesehen werden, der über einen Riementrieb oder dgl. mit der Dosierscheibe trieblich verbunden ist, es ist aber auch möglich, diese durch einen herkömmlichen Elektromotor anzutreiben, der durch an dem Dosierscheibengehäuse abgestützte über die Meßkammern der Dosierscheibe miteinander kommunizierende Sende- und Empfangsmodule in Form einer Lichtschranke gesteuert werden kann.

Ferner ist es angebracht, um bei Anordnung der Dosiervorrichtung z. B. über einem Tränkeautomaten zur Aufbereitung von Futtermittel das Eindringen von Feuchtigkeit in das Gehäuse der Dosierscheibe und den Vorratsbehälter in Ruhestellung auszuschließen, unterhalb des Dosierscheibengehäuses eine vorzugsweise synchron mit dieser antreibbare Abdeckscheibe zum Verschließen der Auswurföffnung anzuordnen. Außerdem sollte die Dosierscheibe und/oder die Abdeckscheibe derart mit Hilfe des Schrittmotors oder der Lichtschranke gesteuert werden, daß bei Außerbetriebnahme der Dosiervorrichtung jeweils ein zwischen zwei Meßkammern der Dosierscheibe angeordneter Bereich sich über bzw. unterhalb der Auswurföffnung befindet.

Wird ein Vorrichtung zur dosierten Überführung eines schüttfähigen Gutes gemäß der Erfindung ausgebildet, so ist es möglich, diese ohne Schwierigkeiten in eine Anlage einzubauen und damit die dosierte Zuführung z. B. eines Medikamentes in ein Futtermittel zu bewerkstelligen, ohne daß dazu ein großer Bauraum sowie ein hoher Bauaufwand erforderlich sind. Des weiteren ist nahezu ein störungsfreier Betrieb über einen längeren Zeitraum gewährleistet, da lediglich die Dosierscheibe anzutreiben ist, um das in dem Vorratsbehälter in deren Meßkammern mit Hilfe des

Füllschiebers eingebrachte Gut zur Arbeitsstation zu befördern. Dabei ist von besonderem Vorteil, daß die Meßkammern trotz horizontaler Anordnung der Dosierscheibe gleichmäßig befüllt werden und somit stets eine exakte Dosierung gegeben ist. Und da über die Größe der in der Dosierscheibe vorgesehenen Meßkammern und/oder die Anzahl der jeweils zur entleerenden Meßkammern die Menge des überführten Gutes auf den jeweiligen Einsatzzweck leicht abgestimmt werden kann, ist die vorschlagsgemäß ausgebildete Vorrichtung in vorteilhafter Weise sehr vielseitig einsetzbar.

In der Zeichnung ist ein Ausführungsbeispiel der gemäß der Erfindung ausgebildeten Vorrichtung zur dosierten Überführung eines schüttfähigen Gutes aus einem Vorratsbehälter in eine Arbeitsstation mittels einer rotierend antreibbaren, mit Meßkammern ausgestatteten Dosierschiebe dargestellt, das nachfolgend im einzelnen erläutert ist. Hierbei zeigt:

Figur 1    die Vorrichtung in Vorderansicht,
Figur 2    die Vorrichtung nach Figur 1 in Draufsicht,
Figur 3    eine abgeänderte Ausgestaltung der Dosierscheibe der Vorrichtung nach Figur 1, in Draufsicht,
Figur 4    einen achssenkrechten Schnitt durch die Dosierscheibe nach Figur 3 und
Figur 5    eine weitere Ausführungsform einer bei der Vorrichtung nach Figur 1 verwendeten Dosierscheibe.

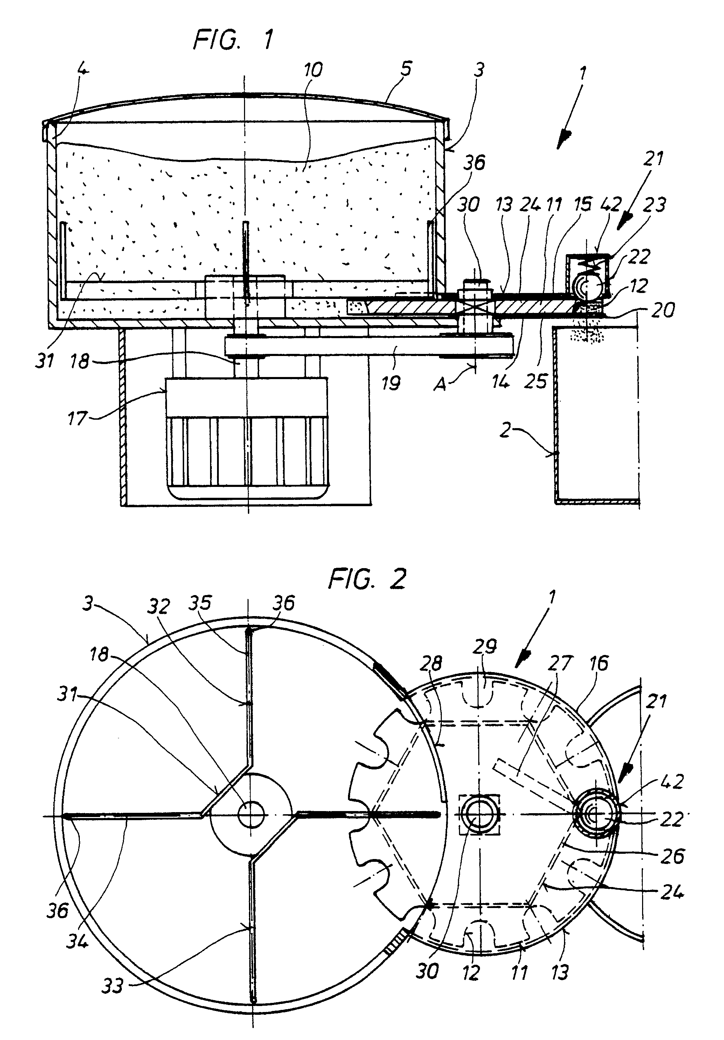

Die in den Figuren 1 und 2 dargestellte und mit 1 bezeichnete Vorrichtung dient zur dosierten Zuführung eines in einem Vorratsbehälter 3 eingelagerten schüttfähigen Gutes 10, beispielsweise eines pulverförmigen Medikamentes, zu einer Arbeitsstation, die in dem gezeigten Ausführungsbeispiel als Tränkeautomat 2 ausgebildet ist, in dem ein Futtermittel aufbereitet wird. Das Gut 10 wird in bestimmten einstellbaren Mengen mittels einer rotierend antreibbaren Dosierscheibe 11 in den Tränkeautomaten 2 eingebracht, die dazu mit Meßkammern 12 in Form von etwa halbkreisförmig ausgebildeten Ausnehmungen 29 versehen ist.

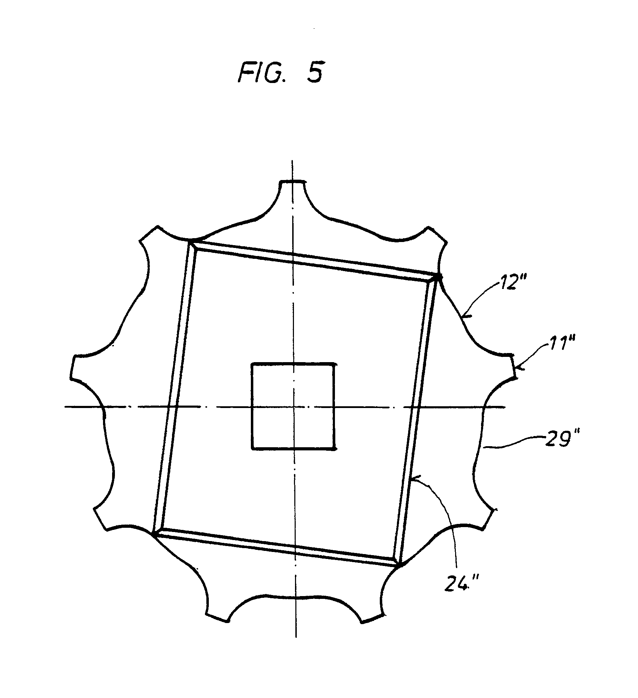

Die Dosierscheibe 11 ist in einem aus einer Bodenplatte 14, einer Deckplatte 15 sowie einer Ummantelung 16 gebildeten Gehäuse 13 seitlich versetzt zu dem Gehäuse 4 des Vorratsbehälters 3 achsparallel zu diesem angeordnet und greift segmentartig im Bereich des Bodens des Vorratsbehälters 3 in diesen ein. Zum Antrieb der Dosierscheibe 11 ist ein elektrischer Schrittmotor 17 vorgesehen, dessen Abtriebswelle 18 über einen Riementrieb 19 mit einer Welle 30 in Triebverbindung steht, mittels der die Dosierscheibe 11 auswechselbar in der Bodenplatte 14 sowie der Deckplatte 15 gelagert ist. Dazu sind, wie dies im einzelner der Figur 4 zu entnehmen ist, die Bodenplatte 14 und die Abdeckplatte 15 jeweils mit einer Lagerbuchse 41 versehen und zur drehfesten Verbindung der Dosierscheibe 11 mit der Welle 12 ist an dieser ein Mehrkant 39 angearbeitet, so daß nach dem Entfernen der Deckplatte 15 die Dosierscheibe 14 leicht von der Welle 30 abgenommen und gegebenenfalls eine andersartig ausgebildete Dosierscheibe auf diese aufgesetzt werden kann.

Das in dem durch einen Deckel 5 verschlossenen Gehäuse 4 des Vorratsbehälters 3 eingelagerte Gut 10 wird mittels eines ebenfalls rotierend antreibbaren Füllschiebers 31 gleichmäßig in die nach oben, unten und in radialer Richtung offenen Meßkammern 12 der Dosierscheibe 11 eingebracht und gelangt über eine in die Bodenplatte 14 eingearbeitete Auswurföffnung 20, sobald sich eine der Meßkammern 12 über dieser befindet, in den Tränkeautomaten 2. Um eine sichere Ausbringung zu gewährleisten, sind die Meßkammern 12 in ihrer Querschnittsform derart gestaltet, daß sich diese in Richtung der Bodenplatte 12 erweitern, und über der Auswurföffnung 20 ist ein selbsttätig wirkender Auswerfer 21 angeordnet, durch den das in einer Meßkammer 12 befindliche Gut 10, sobald dieses sich über der Auswurföffnung 20 befindet, ausgestoßen wird.

Bei dem gezeigten Ausführungsbeispiel ist der Auswerfer 21 aus einer in einer Hülse 42 eingesetzten Kugel 22 und einer Feder 23, die sich an der Hülse 42 abstützt und auf die Kugel 22 einwirkt, gebildet. In gleicher Weise kann aber auch ein angeschrägter Stift oder ein maschinell betätigter Stößel wirksam sein.

Der Füllschieber 31, mittels dem die Meßkammern 12 der Dosierscheibe 11 befüllt werden, besteht aus zwei diametral einander gegenüberliegend angeordnete mit der Abtriebswelle 18 des Stellmotors 17 trieblich verbundene Federbügel 32 und 33, die jeweils um 90° zueinander versetzt angeordnete Arme 34 und 35 aufweisen. Und an den Enden der Arme 34, 35 sind nach oben abstehende Abstreifer 36 angebracht, durch die das an der Innenwandung des Gehäuses 4 des Vorratsbehälters 3 haftende Gut 10 abgestreift wird.

Um auszuschließen, daß die Dosierscheibe 11 zwischen der Bodenplatte 14 und der Deckplatte 15 durch mitgeführtes Gut verklemmt wird, ist an dem Gehäuse 4 des Vorratsbehälters 11 ein sich in dessen Umfangsrichtung erstreckender auf der Dosierscheibe 11 aufliegender Abstreifer 28 angebracht, und es sind zusätzlich auf der Oberseite und auf der Unterseite der Dosierscheibe 11 Abstreifer 24 und 25 in Gestalt sechseckiger Ansatzstücke angearbeitet, deren Ecken jeweils im Bereich einer Meßkammer 12 angeordnet sind. Außerdem sind die Abstreifer 24 und 25 mit einer den Meßkammern 12 zugekehrten Phase 26 versehen. An der Bodenplatte 14 und/oder der Deckplatte 15 haftendes Gut 10 wird somit von den Abstreifern 24 und/oder 25 abgestreift und einer der Meßkammern 12 zugeführt. Des weiteren ist, ebenfalls zur Abführung von zwischen der Dosierscheibe 11 und der Bodenplatte 14 eingelagerten Gut in diese ein Schlitz 27 eingearbeitet, der in die Auswurföffnung 20 mündet. Und da zwischen den Abstreifern 24, 25 der Dosierscheibe 11 und der Bodenplatte 14 sowie der Deckplatte 15 Distanzscheiben 40 eingesetzt sind, ist sichergestellt, daß die Dosierscheibe 11 durch mitgenommenes Gut nicht verklemmt wird.

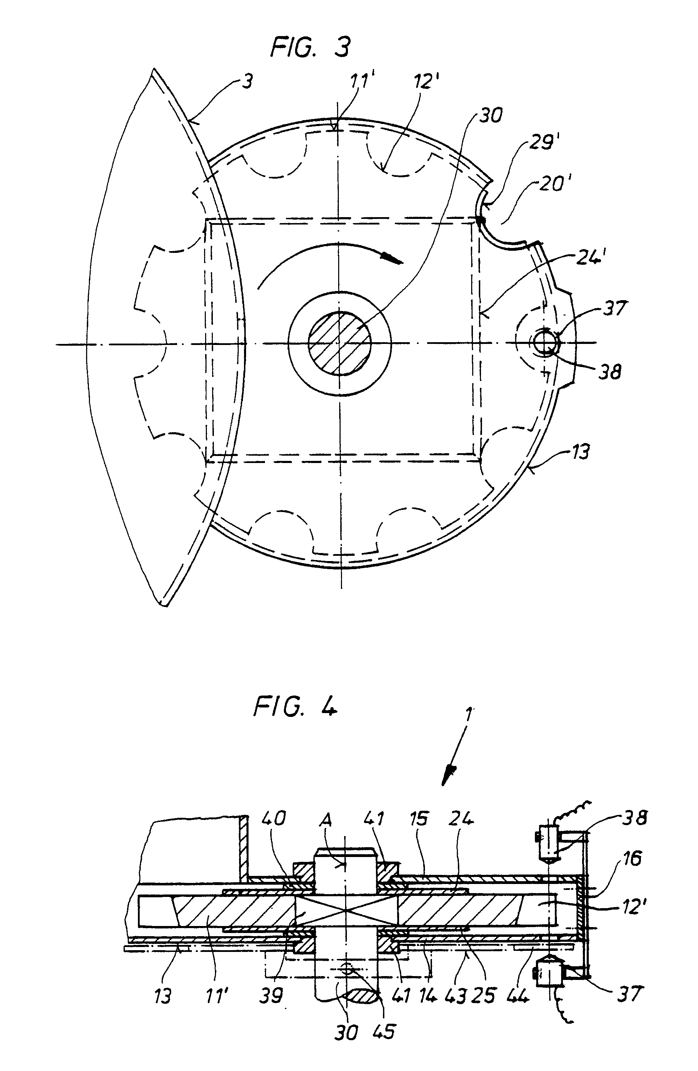

Zum Antrieb der Dosierscheibe 11 kann gemäß der Darstellung in den Figuren 1 und 2 ein elektrischer Schrittmotor 17 vorgesehen werden, es ist aber auch möglich, dazu einen herkömmlichen Elektromotor zu verwenden, der allerdings entsprechend zu steuern ist. Dazu können, wie dies in den Figuren 3 und 4 gezeigt ist, Sende- und Empfangsmodule 37 und 38 nach Art einer Lichtschranke vorgesehen werden, die an dem Gehäuse 13 gehalten sind und die über die Meßkammern 12 der Dosierscheibe 11 miteinander kommunizieren.

Bei der Ausführungsform nach Figur 3 sind ebenfalls halbkreisförmige Ausnehmungen 29' als Meßkammern 12' vorgesehen, die Abstreifer 24' bestehen jedoch aus quadratischen Ansatzstücken. Auch ist die Auswurföffnung 20' gegenüber der Ausgestaltung nach Figur 1 versetzt angeordnet, um die Sende- und Empfangsmodule 37 und 38 nach dieser auf einfache Weise anbringen zu können. Mit den Sende- und Empfangsmodulen 37 und 38 kann somit auch geprüft werden, ob eine Entleerung der über die Auswurföffnung 20' gefahrene Meßkammer stattgefunden hat.

Bei der Ausgestaltung nach Figur 5 sind die Meßkammern 12'' der Dosierscheibe 11'' durch sich in deren Umfangsrichtung erstreckende Ausnehmungen 29'' gebildet, die in den Eckbereichen mit einem Radius ausgerundet sind, der etwa der Tiefe der Ausnehmungen 29'' entspricht. Und der Abstreifer 24'', dessen Ecken jeweils im Bereich einer der Meßkammern 12' liegen, ist hierbei rechteckig gestaltet.

Um auszuschließen, daß bei der nicht im Betrieb befindlichen Dosiervorrichtung 1 aus dem Tränkeautomaten 2 evtl. Feuchtigkeit in das Gehäuse 13 der Dosierscheibe 11 sowie den Vorratsbehälter 3 gelangt und das eingelagerte Gut 10 dadurch beeinträchtigt würde, kann, wie dies in Figur 4 strichpunktiert eingezeichnet ist, unterhalb der Bodenplatte 14 des Gehäuses 13 eine Abdeckscheibe 43 angeordnet werden, die mittels eines Stiftes 45 fest mit der Welle 30 verbunden ist und somit synchron mit der Dosierscheibe 11 angetrieben wird. Die Abdeckscheibe 43 weist Öffnungen 44 auf, die unterhalb der Meßkammern 12' liegen, so daß die dosierte Einbringung in den Tränkeautomaten durch die Abdeckscheibe 43 nicht behindert wird.

Bei Außerbetriebnahme der Dosiervorrichtung 1 werden jedoch die Dosierscheibe 11 sowie die Abdeckscheibe 43 derart gesteuert,, und zwar durch den Schrittmotor 17 oder die Sende- und Empfangsmodule 37, 38, daß sich jeweils ein zwischen zwei Meßkammern 12 der Dosierscheibe 11 und Öffnungen 44 der Abdeckscheibe 43 angeordneter Bereich über bzw. unterhalb der Auswurföffnung 20 befindet, so daß diese zuverlässig abgedeckt ist und Feuchtigkeit, wie beispielsweise heißer Dampf, demnach nicht in das Gehäuse 13 und den Vorratsbehälter 3 gelangen kann.

## Patentansprüche

1. Vorrichtung zur dosierten Überführung eines schüttfähigen Gutes aus einem Vorratsbehälter in eine Arbeitsstation, beispielsweise zur Einbringung eines pulverförmigen Medikamentes in ein in einem Tränkeautomaten aufzubereitendes Futtermittel, mit einer rotierend antreibbaren Dosierscheibe, die mit Meßkammern versehen ist,

   **dadurch gekennzeichnet,**

   daß die um eine vertikal verlaufende Achse (A) antreibbare Dosierscheibe (11, 11', 11") seitlich versetzt zu dem Vorratsbehälter (3) und achsparallel zu diesem auf einer die Meßkammern (12, 12', 12") abdeckenden und mit einer Auswurföffnung (20, 20') versehenen ortsfesten Bodenplatte (14) angeordnet ist und segmentartig im Bereich des Bodens des Vorratsbehälters (3) in diesen eingreift, und daß die Meßkammern (12, 12',12") in die Außenmantelfläche der Dosierscheibe (11, 11',11") eingearbeitet und in vertikaler Richtung nach oben und unten sowie in radialer Richtung nach außen offen ausgebildet sind.

2. Vorrichtung nach Anspruch 1,

   **dadurch gekennzeichnet,**

   daß die Meßkammern (12, 12') der Dosierscheibe (11, 11') als im Querschnitt etwa halbkreisförmige Ausnehmungen (29), als keilförmige Schlitze od.dgl. ausgebildet sind.

3. Vorrichtung nach Anspruch 1,

   **dadurch gekennzeichnet,**

   daß die Meßkammern (12") der Dosierscheibe (11") als sich in deren Umfangsrichtung erstreckende Ausnehmungen (29') ausgebildet sind, die in den Eckbereichen mit einem vorzugsweise etwa der Tiefe der Ausnehmungen entsprechenden Radius ausgerundet sind.

4. Vorrichtung nach einem oder mehreren der Ansprüche 1 bis 3,

   **dadurch gekennzeichnet,**

   daß die Meßkammern (12, 12', 12") der Dosierscheibe (11, 11', 11") eine sich in Richtung der Bodenplatte (14) erweiternde Querschnittsform aufweisen.

5. Vorrichtung nach einem oder mehreren der Ansprüche 1 bis 4,

   **dadurch gekennzeichnet,**

   daß die Dosierscheibe (11, 11', 11") außerhalb des Vorratsbehälters (3) in einem durch die Bodenplatte (14), einer Abdeckplatte (15) und einer zwischen diesen vorgesehenen Ummantelung (16) ausgebildeten Gehäuse (13) angeordnet ist.

6. Vorrichtung nach einem oder mehreren der Ansprüche 1 bis 5,

   **dadurch gekennzeichnet,**

   daß die Dosierscheibe (11, 11', 11") auswechselbar in der Bodenplatte (14) und der Deckplatte (15) des Gehäuses (13) drehbar gelagert ist.

7. Vorrichtung nach einem oder mehreren der Ansprüche 1 bis 6,

   **dadurch gekennzeichnet,**

   daß über der Auswurföffnung (20, 20') der Bodenplatte (14) ein vertikal zustellbares Austragglied (21) angeordnet ist.

8. Vorrichtung nach Anspruch 7,

**dadurch gekennzeichnet,**

daß das Austragglied (21) als vorzugsweise durch die Kraft einer Feder (23) belastete in einer auf dem Dosierscheibengehäuse (13) angeordneten Hülse (42) eingesetzten Kugel (22) oder als mit einer Anschrägung versehener Stift, als verstellbarer Stößel oder dgl. ausgebildet ist.

9. Vorrichtung nach einem oder mehreren der Ansprüche 1 bis 8,

**dadurch gekennzeichnet,**

daß die Dosierscheibe (11, 11', 11'') auf einer oder beiden der Abdeckplatte (15) und/oder der Bodenplatte (14) zugekehrten Stirnseiten mit einem Abstreifer (24, 25, 24', 24'') versehen ist.

10. Vorrichtung nach Anspruch 9,

**dadurch gekennzeichnet,**

daß der Abstreifer (24, 25, 24', 24'') als an der Dosierscheibe (11, 11', 11'') angearbeitetes mehrkantiges Ansatzstück, vorzugsweise als quadratisches oder sechseckig ausgebildetes Ansatzstück ausgebildet ist, dessen den Meßkammern (12, 12', 12'') zugekehrte Kanten (Phase 26) abgeschrägt sind.

11. Vorrichtung nach Anspruch 10,

**dadurch gekennzeichnet,**

daß die die Abstreifer (24, 25, 24', 24'') bildenden Ansatzstücke derart an der Dosierscheibe (11, 11', 11'') angearbeitet sind, daß deren Ecken jeweils im Bereich einer Meßkammer (12, 12', 12'') angeordnet sind oder an eine der Meßkammern (12, 12', 12'') angrenzen.

12. Vorrichtung nach einem oder mehreren der Ansprüche 1 bis 11,

**dadurch gekennzeichnet,**

daß die Bodenplatte (14) des Dosierscheibengehäuses (13) mit einer oder mehreren schlitzartig ausgebildeten und in die Auswurföffnung (20) mündenden Freisparungen (27) versehen ist.

13. Vorrichtung nach einem oder mehreren der Ansprüche 1 bis 12,

**dadurch gekennzeichnet,**

daß an dem Gehäuse (4) des Vorratsbehälters (3) ein vor der Abdeckplatte (15) des Dosierscheibengehäuses (13) angeordneter sich vorzugsweise in Umfangsrichtung des Vorratsbehälters (3) bis etwa in Höhe der Rotationsachse (A) der Dosierscheibe (11) erstreckender Abstreifer (28) angebracht ist.

14. Vorrichtung nach einem oder mehreren der Ansprüche 1 bis 13,

**dadurch gekennzeichnet,**

daß zur Einbringung des Gutes in die Meßkammern (12) der Dosierscheibe (11) in dem Vorratsbehälter (3) ein vorzugsweise durch einen der Dosierscheibe (11) zugeordneten Antriebsmotor (17) rotierend antreibbarer Füllschieber (31) angeordnet ist.

15. Vorrichtung nach Anspruch 14,

**dadurch gekennzeichnet,**

daß der Füllschieber (31) durch zwei oder mehrere diametral einander gegenüberliegend angeordnete das in den Vorratsbehälter (3) ragende Segmente der Dosierscheibe (11) überfahrende Federbügel (32, 33), Platten oder dgl. gebildet ist.

16. Vorrichtung nach Anspruch 15,

**dadurch gekennzeichnet,**

daß die Federbügel (32, 33) jeweils zwei in einem Winkel von 90° zueinander angeordnete Arme (34, 35) aufweisen.

17. Vorrichtung nach Anspruch 15 oder 16,

**dadurch gekennzeichnet,**

daß an den Enden mindestens eines der Federbügel (32, 33) des Füllschiebers (31) in vertikaler Richtung nach oben abstehende Abstreifer (36) angebracht sind.

18. Vorrichtung nach einem oder mehreren der Ansprüche 15 bis 17,

**dadurch gekennzeichnet,**

daß der Füllschieber (31) gleichsinnig mit der Dosierscheibe (11) antreibbar ist.

19. Vorrichtung nach einem oder mehreren der Ansprüche 1 bis 18,

**dadurch gekennzeichnet,**

daß zum Antrieb der Dosierscheibe (11) ein vorzugsweise konzentrisch zu dem Vorratsbehälter (3) angeordneter elektrischer Schrittmotor (17) vorgesehen ist, der über einen Riementrieb (19) oder dgl. mit der Dosierscheibe (11) trieblich verbunden ist.

20. Vorrichtung nach einem oder mehreren der Ansprüche 1 bis 18,

**dadurch gekennzeichnet,**

daß zur Steuerung des Antriebsmotors (17) der Dosierscheibe (11) an dem Dosierscheibengehäuse (13) abgestützte über die Meßkammern (12) der Dosierscheibe (11) miteinander kommunizierende Sende- und Empfangsmodule, beispielsweise in Form einer Lichtschranke (37, 38) eingesetzt sind.

21. Vorrichtung nach einem oder mehreren der Ansprüche 1 bis 20,

**dadurch gekennzeichnet,**

daß unterhalb des die Dosierscheibe (11') aufnehmenden Gehäuses (13) eine vorzugsweise synchron mit dieser antreibbare Abdeckscheibe (43) zum Verschließen der Auswurföffnung (20') in Ruhestellung der Dosiervorrichtung (1) angeordnet ist.

22. Vorrichtung nach einem oder mehreren der Ansprüche 1 bis 21,

**dadurch gekennzeichnet,**

daß die Dosierscheibe (11') und/oder die Abdeckscheibe (43) derart steuerbar sind, daß bei Außerbetriebnahme der Dosiervorrichtung (1) jeweils ein zwischen zwei Meßkammern (12') der Dosierscheibe (11') angeordneter Bereich sich über bzw. unterhalb der Auswurföffnung (20) befindet.

FIG. 1

FIG. 2

## FIG. 3

## FIG. 4

## FIG. 5